# EUROPEAN PATENT APPLICATION

(11) **EP 1 973 058 A2**
(43) Date of publication of application: **24.09.2008**
(21) Application number: 08152835.8
(22) Date of filing: 17.03.2008
(51) Int. Cl.: G06K 9/00

(54) **Method of object classification of images obtained by an imaging device**

(30) Priority: 22.03.2007 US 726592
(71) Applicant: Delphi Technologies, Inc., Troy, Michigan 48007 (US)
(72) Inventor: Kiselewich, Stephen J., Carmel, IN 46032 (US); Zhang, Yan, Westfield, IN 46074 (US); Park, Su-Birm, 52457 Aldenhoven (DE)
(74) Representative: Denton, Michael John

(57) **Abstract**

A method of object classification (10) including the steps of providing an image device (28), providing selecting predetermined imaging features to be extracted from an image produced by the imaging device (28) based upon a desired classification of an object (14), and obtaining an image (16) by the imaging device (28) of at least one object in a field of view of the imaging device (28). The method (10) further includes the steps of extracting at least one feature from the image (18), wherein the at least one feature corresponds to the predetermined imaging features, determining a value for each of the extracted at least one feature (21), and classifying the object based upon the at least one feature that could be extracted from the image (22).

## Description

### Technical Field

The present invention generally relates to a method of classifying an object in an image obtained by an imaging device, and more particularly, to classifying an object in an image as a pedestrian using a single camera.

### Background of the Invention

In some circumstances, it is ideal for a vehicle to contain an image classification system. Having an image classification system allows the vehicle to identify a variety of objects for a variety of reasons. For example, an image classification system can be used to identify an occupant in a vehicle. Another example for use of an image recognition system is to classify objects in a collision warning system.

Whether the image classification system is used for recognizing an occupant in a vehicle or a collision warning system, it is important for the image classification system to be accurate in its classification of the imaged object. When classifying the object in the image taken by an imaging device, there are generally many different imaging features that can be extracted to make the determination depending on the type of image. The accuracy of the image classification system can typically result in a high ratio of true classifications by comparing a great number of features. However, to obtain the high ratio of true classifications in this manner can typically result in a slow or sluggish processing due to the amount of data being extracted from the image and analyzed by an image processor.

Additionally, multiple imaging devices, including color cameras, can generally be utilized to increase the number of images obtained and quality of the images obtained in order to increase the number of features that can be extracted when classifying the object. By having an excessive amount of images or images that require a lot of memory to be stored, such as color images, the object classification system is typically slow or sluggish when processing the data. Alternatively, a single imaging device can be used where a sequence of images is generally analyzed. The excessive amount of analysis of the sequence of images typically results in a slow or sluggish processing time.

However, by not having enough images or by having poor quality images, the object classification system generally results in a high number of false classifications, which is also undesirable. Typically, the false classifications of the object are obtained by having a limited number of extractable features in the image due to the poor quality of the image or the image being black and white. False classifications can also be obtained generally by using a single imaging device, which limits the number of images available to be analyzed. Thus, having lower quality of images, a lower number of images, or a lower number of extractable features typically results in fast processing times, but can result in a high number of false classifications.

Therefore, it is desirable to develop an object classification system that utilizes minimal images having lower quality, while having a high ratio of correct classification with a quick processing time period.

### Summary of the Invention

According to one aspect of the present invention, a method of object classification is provided that includes the steps of providing an imaging device, and providing predetermined imaging features that are to be extracted from an image produced by the imaging device based upon a desired classification of an object. Additional steps included in the method are obtaining an image by the imaging device of at least one object in a field of view of the imaging device, and extracting at least one feature from the image, wherein the at least one feature corresponds to the predetermined imaging features. Further, steps in the method include determining a value for each of the extracted at least one feature, and classifying the object based upon the at least one determined value of at least one extracted feature.

According to another aspect of the present invention, a method of object classification is provided that includes the steps of providing an imaging device, providing predetermined imaging features, which are extracted from an image produced by the imaging device based upon a desired classification of an object, and obtaining an image by the imaging device of at least one object in a field of view of the imaging device. Additional steps included in the method are extracting a plurality of features from the image, wherein the plurality of features correspond to the selected predetermined imaging features, analyzing a pattern of the extracted plurality of features, determining a value of the extracted at least one feature, and classifying the object based upon the at least one determined value of at least one extracted feature, wherein the classifying generates a true/false classification.

According to a further aspect of the present invention, a method of object classification is provided that includes the steps of providing a single monochrome camera, and providing predetermined imaging features, which are to be extracted from an image produced by the monochrome camera based upon a desired classification of an object. Additional steps included in the method are obtaining an image by the monochrome camera of at least one obj ect in a field of view of the monochrome camera, providing a controller that receives the image from the monochrome camera, extracting a plurality of features from the image, wherein the plurality of features correspond to the predetermined imaging features, and analyzing a pattern of the extracted plurality of features. Further steps in the method include determining a value of the extracted at least one feature, and classifying the object as a pedestrian based upon at least one determined value of at least one extracted feature, wherein the classifying generates a true/false classification.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 is a flow chart of a method of an object classification in accordance with an embodiment of the present invention;
Fig. 2 is a circuit diagram of an object classification system in accordance with an embodiment of the present invention;
Fig. 3 is a circuit diagram of an object classification system in accordance with an embodiment of the present invention; and
Fig. 4 is an environmental plan view of an object classification system in accordance with an embodiment of the present invention.

### Description of the Preferred Embodiments

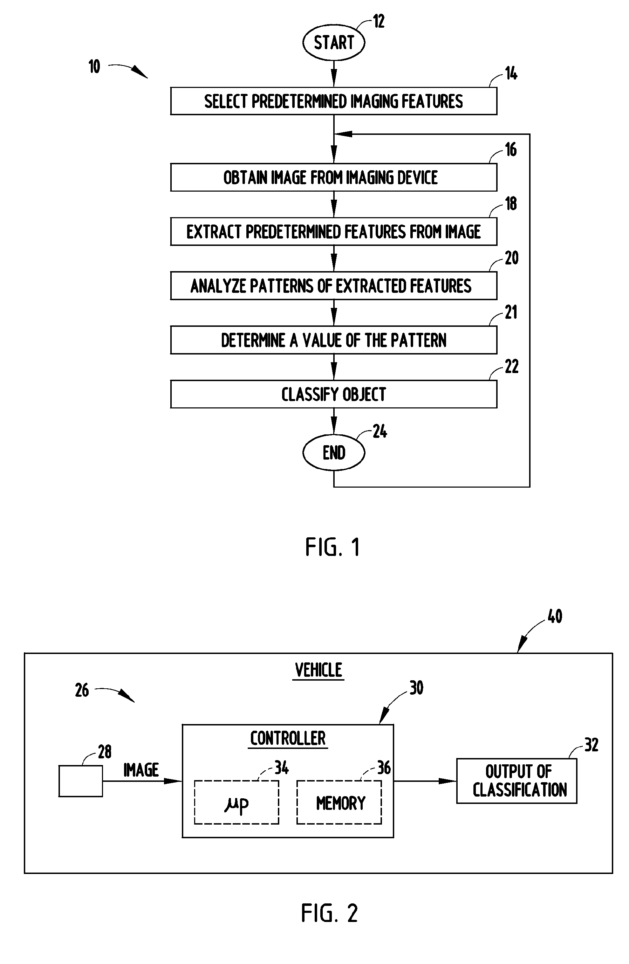

In reference to Fig. 1, a method of object classification is generally shown at reference indicator 10. The method 10 starts at step 12 and proceeds to step 14, where predetermined imaging features are provided or selected. The selected predetermined imaging features are the features that are to be extracted from an image that is produced or captured by an imaging device. The selected predetermined imaging features that are selected are based upon a desired classification of an object, as described in greater detail below.

The method 10 then proceeds to step 16, where the image is obtained from the imaging device. The image from the imaging device is an image of at least one object that is in a field of view of the imaging device. Next, at step 18, at least one feature is extracted from the image. The at least one feature that is extracted from the image corresponds to the selected predetermined imaging features of step 14. Then, at step 20, the elements, subsets of the feature, or patterns of the features of the image that were extracted are analyzed. After analyzing the elements, subsets, or patterns of the extracted features at step 20 a value of each element, subset, or pattern is determined at step 21. The value is typically a numerical value that can be determined when developing the type of classifier being used, wherein the classifier is described in greater detail below. The object is then classified at step 22 based upon the value of at least one extracted feature, such that the determined value of the element, subset, or pattern is used. The method 10 ends at step 24.

Typically, the method 10 only conducts step 14 when the method 10 is implemented the first time or for subsequent re-programmings. Thus, after the first time the method 10 is implemented, the same predetermined features are used, and step 14 does not have to be performed. This is illustrated in Fig. 1 as the connection between step 24, where the method 10 ends, and step 16, where the method 10 can start in subsequent uses of the method 10. However, it should be appreciated that step 14 could be used subsequently to re-program the features that are to be extracted from the image.

Typically, the classification of the object generates a true/false classification, such that the output is a 0 or 1 to indicate that the object is or is not the desired classification of the object. By way of explanation and not limitation, if the desired classification of the object is to identify the object within the filed of view of the imaging device as a pedestrian, the classification will be a true/false classification to indicate that the object is or is not a pedestrian. Thus, when classifying the object, a true result is obtained based upon at least one of the determined values of the feature, such as the value of the element, subset, or pattern. Thus, if the value, such as individual values for individual features or combined values of multiple features, equal a predetermined value or are within a predetermined range, a true result is obtained. Likewise, a false result is obtained based upon at least one of the determined values of the feature, such as the value of the element, subset, or pattern. Thus, if the value, such as individual values of individual features or combined values of multiple features, do not equal a predetermined value or are outside of a predetermined range, a false result is obtained.

By way of explanation and not limitation, the selected predetermined features used to classify the object as a pedestrian are edge features, Legendre moment features, wavelet features, edge orientation histogram features, pixel gray-level value features, the like, or a combination thereof. The above features can also be used in order to classify objects as something other than a pedestrian. Further, it should be appreciated that other types of features can be used in order to classify the object as a pedestrian. It should also be appreciated that the method 10 can be used to classify an object as something other than a pedestrian by altering the types of features analyzed or the predetermined features to be extracted from the image.

Edge features are typically used to characterize the regional contrast between the object and the surrounding background in the image. Edge features can also be used to characterize the horizontal symmetry of the object. The use of edge features for classifying an object is described in U.S. Patent Application Publication No. 2005/0201591, entitled "METHOD AND APPARATUS FOR RECOGNIZING THE POSITION OF AN OCCUPANT IN A VEHICLE," the entire disclosure of which is hereby incorporated herein by reference.

Legendre moment features represent the texture and geometric structure of an object in the image. The use of Legendre moments to classify objects is described in U.S. Patent Application Publication No. 2006/0153459, entitled "OBJECT CLASSIFICATION METHOD FOR A COLLISION WARNING SYSTEM," the entire disclosure of which is hereby incorporated herein by reference.

Wavelet features are typically extracted from three directions in four resolutions, and represent a redundant set of gradient information of the image across multiple orientations and scales. The use of wavelet features to classify an object is described in the aforementioned U.S. Patent Application Publication No. 2005/0201591, and is further described in U.S. Patent Application Publication No. 2006/0088219, entitled "OBJECT CLASSIFICATION METHOD UTILIZING WAVELET SIGNATURES OF A MONOCULAR VIDEO IMAGE," the entire disclosure of which is also hereby incorporated herein by reference.

Edge orientation histogram features are generally used to characterize the statistics of local gradient orientations in a histogram. The size of the local region and number of histograms is a predetermined number. In order to increase the efficiency of the edge orientation histogram features, the local image regions can overlap in order to obtain redundant histogram information. Also, only pixels that have gradient magnitudes larger than a threshold can be used for orientation histogram extraction, in order to suppress the distortion caused by noise. Additionally, the edge orientation histogram for each local region can be normalized for a comparable statistical metric.

Additionally, predetermined elements, subsets, or patterns of the selected predetermined features can be chosen based upon the probability of the element, subset, or pattern producing an accurate result. For example purposes only, and in no way limiting, elements, subsets, or patterns that are usually present or not present when classifying an object as a pedestrian would be a high probability element or pattern when compared to an element or pattern that is generally in an image of a pedestrian 50% of the time.

Examples of known algorithms for selecting the predetermined elements, subsets, or patterns are, but not limited to, See5, AdaBoost, or the like. Such algorithms are based upon decision trees of elements, subsets, or patterns of the feature. The decision tree can have multiple elements, subsets, or patterns, where the elements, subsets, or patterns that are at the top of the decision tree are the high probability elements, subsets, or patterns. Alternatively, there can be a cascade of simple decision trees with a single element, subset, or pattern so that there is a single determination or threshold value for each decision tree. The high probability elements, subsets, or patterns can then be determined based upon the outcome of the simple decision trees.

By way of explanation and not limitation, there are 24 edge elements, subsets, or patterns; 140 Legendre moment elements, subsets, or patterns; 2,736 wavelet elements, subsets, or patterns; 504 edge orientation histogram elements, subsets, or patterns, and 2,048 pixel gray-level value elements, subsets, or patterns, according to one example. Typically, the above described elements, subsets, or patterns are beneficial for classifying an object as a pedestrian. Out of these elements, subsets, or patterns, a known algorithm, such as AdaBoost, can narrow these elements, subsets, or patterns to a number of high probability elements, subsets, or patterns that can be selected to be extracted from the image in order to classify the object as a pedestrian. For example, and in no way limiting, the algorithm can select 450 high probability elements, subsets, or patterns of the above that are used to classify the object as a pedestrian.

In reference to Fig. 2, an object classification system is generally shown at reference indicator 26. The object classification system 26 comprises an imaging device 28, a controller generally indicated at reference indicator 30, and an output 32. A single imaging device 28 is used in order to limit the amount of images that must be analyzed in order to classify the object. This results in quicker analysis of the image, when compared to a system with multiple imaging devices. Typically, the imaging device 28 is a monochrome camera that produces or generates a black and white image of the object in the field of view. However, it should be appreciated that other suitable cameras, including colored cameras, can be used in the method 10 and system 26. The controller 30 receives the image from the imaging device 28. Typically, the controller 30 includes a processor, such as a microprocessor 34, and memory 36. Thus, the controller 30 receives the image from the imaging device 28, and extracts at least one feature from the image based upon the selected predetermined imaging features. The controller 30 can then determine the value of the at least one feature, classify the object, and transmit an output of the classification.

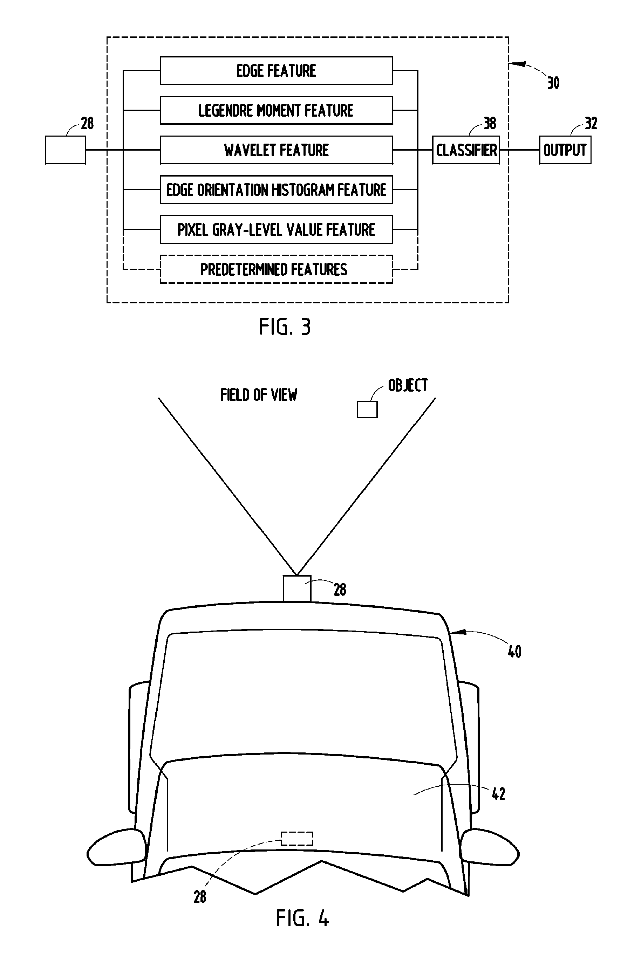

In reference to Fig. 3, it is being shown how the controller 30 breaks down and processes the image by the predetermined features, such that the image of the object is obtained by the imaging device 28 and transmitted to the controller 30. A combination of edge, Legendre moment, wavelet, edge orientation histogram, and pixel gray-level value features are extracted from the image by the controller 30 by executing one or more software routines. Alternatively, other predetermined features can be extracted by the controller 30 based upon the desired classification of the object. Additionally, a classifier 38 can be used to analyze the elements, subsets, or patterns of the extracted features of the image to determine the value of the feature, and if the imaged object is or is not within the desired classification (i.e., pedestrian, etc.). The classification is performed by the controller 30, such as, by execution of a software routine. The classifier 38 can be, but is not limited to, a neural network classifier, a support vector machine, or the like.

By way of explanation and not limitation, referring to both Figs. 2 and 4, the system 26 is shown being used with a vehicle generally indicated at reference indicator 40. The camera 28 is typically placed on the front end of the vehicle 40 in order to monitor objects within the field of view as the vehicle 40 is in motion. The camera 28 can also be located on other areas of the vehicle 40, such as on a windshield 42, as shown in phantom in Fig. 4. Additionally, the camera 28 can be placed on other areas of the vehicle 40 where it is desirable to identify an object as a human. The system 26 can continuously monitor the field of view to obtain images of objects and classify the objects to determine if the object is a pedestrian. Thus, the system 26 can determine if the vehicle 40 will contact the object or pedestrian, with which other components of the vehicle 40 can act accordingly.

Advantageously, the method 10 and system 26 of object classification is more efficient and economical than a system that uses multiple cameras and/or cameras that produce colored images. By employing a single imaging device 28, a lower number of images must be processed while the black and white pictures require less memory to store the images and allows for quicker processing. However, it should be appreciated that a colored camera could be used in the system 26 or as part of the method 10. Further, by selecting predetermined features and determining a value of the elements, subsets, or patterns within the extracted features, the number of features that must be extracted from the image obtained by the imaging device 28 is minimized, which allows for efficient processing. By selecting high probability features and/or high probability elements, subsets, or patterns within the features, the method 10 and system 26 produces accurate results within an acceptable processing time period.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A method of object classification (10) comprising the steps of:
providing a single imaging device (28);
providing predetermined imaging features to be extracted from an image produced by said imaging device (28) based upon a desired classification of an object (14);
obtaining said image (16) by said imaging device (28) of at least one said object in a field of view of said imaging device (28);
extracting at least one feature from said image (18), wherein said extracted at least one feature corresponds to said predetermined imaging features;
determining a value for each of said extracted at least one feature (21); and
classifying said object based upon said value of said extracted at least one feature that could be extracted from said image (22).

2. The method (10) of claim 1 further comprising the step of analyzing a pattern of said extracted at least one feature (20), wherein said value is determined based upon said analysis of said pattern.

3. The method (10) of claim 1, wherein said step of classifying said object (22) generates a true/false classification.

4. The method (10) of claim 3, wherein said step of classifying said object (22) generates a true result if said value is one of within a predetermined range and equal to a predetermined value.

5. The method (10) of claim 3, wherein said step of classifying said object (22) generates a false result if said value is one of outside a predetermined range and not equal to a predetermined value.

6. The method (10) of claim 1 further comprising the step of determining if said object is a pedestrian, wherein said imaging device (28) is used with a vehicle (40).

7. The method (10) of claim 1, wherein said selected predetermined features comprise at least one of an edge feature, a Legendre moment feature, a wavelet feature, an edge orientation histogram feature, and a pixel gray-level value feature.

8. The method (10) of claim 1 further comprising the step of providing a controller (30), wherein said controller (30) receives said image from said imaging device (28) and extracts said at least one feature from said image.

9. The method (10) of claim 1 further comprising the step of providing a classifier (38) that analyzes said extracted feature.

10. A method of object classification (10) comprising the steps of:
providing a single imaging device (28);
providing predetermined imaging features to be extracted from an image produced by said imaging device (28) based upon a desired classification of an object (14);
obtaining said image (16) by said imaging device (28) of at least one said object in a field of view of said imaging device (28);
extracting a plurality of features from said image (18), wherein said extracted plurality of features correspond to said predetermined imaging features;
analyzing a pattern of said extracted plurality of features (20);
determining a value for said pattern (21); and
classifying said object based upon said value (22), wherein said classifying is a true/false classification.

11. The method (10) of claim 10, wherein said step of classifying said object (22) generates a true result if said value is one of within a predetermined range and equal to a predetermined value.

12. The method (10) of claim 10, wherein said step of classifying said object (22) generates a false result if said value is one of outside a predetermined range and not equal to a predetermined value.

13. The method (10) of claim 10 further comprising the step of determining if said object is a pedestrian, wherein said imaging device (28) is used with a vehicle (40).

14. The method (10) of claim 10, wherein said selected predetermined features comprise at least one of an edge feature, a Legendre moment feature, a wavelet feature, an edge orientation histogram feature, and a pixel gray-level value feature.

15. The method (10) of claim 10 further comprising the step of providing a controller (30), wherein said controller (30) receives said image from said imaging device (28) and extracts said at least one feature from said image.

16. The method (10) of claim 10 further comprising the step of providing a classifier (38) that analyzes said pattern of said extracted plurality of features.

17. A method of object classification (10) comprising the steps of:
providing a single monochrome camera (28) used with a vehicle (40);
providing predetermined imaging features to be extracted from an image produced by said monochrome camera (28) based upon a desired classification of an object (14);
obtaining said image (16) by said monochrome camera (28) of at least one said object in a field of view of said monochrome camera (28);
providing a controller (30) that receives said image from said monochrome camera (28);
extracting a plurality of features from said image (18), wherein said extracted plurality of features correspond to said predetermined imaging features;
analyzing a pattern of said extracted plurality of features (20) by a classifier (38);
determining a value for said pattern (21); and
classifying said object as a pedestrian based upon said value (22), wherein said classifying is a true/false classification.

18. The method (10) of claim 17, wherein said step of classifying said object (22) generates a true result if said value is one of within a predetermined range and equal to a predetermined value.

19. The method (10) of claim 17, wherein said step of classifying said object (22) generates a false result if said value is one of outside a predetermined range and not equal to predetermined value.

20. The method (10) of claim 17, wherein said selected predetermined features comprise at least one of an edge feature, a Legendre moment feature, a wavelet feature, an edge orientation histogram feature, and a pixel gray-level value feature.
